# EUROPÄISCHE PATENTSCHRIFT

(11) **EP 1 805 878 B1**
(45) Veröffentlichungstag und Bekanntmachung des Hinweises auf die Patenterteilung: **16.03.2011**
(21) Anmeldenummer: 05790956.6
(22) Anmeldetag: 12.09.2005
(51) Int. Cl.: H02K 41/03, H02K 7/09, H02N 15/00, E05F 15/18

(54) **SCHIEBETÜR MIT EINEM LINEARMOTOR-ANTRIEB**
SLIDING DOOR COMPRISING A LINEAR MOTOR DRIVE
PORTE COULISSANTE ENTRAÎNÉE PAR UN MOTEUR LINÉAIRE

(30) Priorität: 17.10.2004 DE 102004050333
(43) Veröffentlichungstag der Anmeldung: 11.07.2007
(73) Patentinhaber: Dorma GmbH + Co. KG, 58256 Ennepetal (DE)
(72) Erfinder: BUSCH, Sven, 44139 Dortmund (DE)
(86) Internationale Anmeldenummer: PCT/EP2005/009771
(87) Internationale Veröffentlichungsnummer: WO 2006/039971

(56) Entgegenhaltungen:
- WO-A-2004/053270
- DE-C1- 19 618 518
- US-A- 4 439 698
- US-A- 5 949 036
- US-A1- 2002 112 410
- US-B1- 6 455 970
- PATENT ABSTRACTS OF JAPAN Bd. 009, Nr. 151 (P-367), 26. Juni 1985 (1985-06-26) & JP 60 027915 A (YOKOKAWA HOKUSHIN DENKI KK), 13. Februar 1985 (1985-02-13)

## Beschreibung

Die Erfindung betrifft eine Schiebetür mit einem Linearmotor-Antrieb, insbesondere einen Magnetschiebetürantrieb, der insbesondere in einem kombinierten magnetischen Trag- und Antriebssystem mit einer permanent erregten magnetischen Trageinrichtung mit einer Magnetreihe und einer Linear-Antriebseinheit eingesetzt wird, insbesondere für eine automatische betriebene Tür. Der Begriff der Magnetreihe umfasst auch längliche Einzelmagneten. Die Magnetreihe kann ortsfest oder ortsveränderlich angeordnet sein.

Aus der DE 40 16 948 A1 ist eine Schiebetürführung bekannt, bei der miteinander zusammenwirkende Magnete bei normaler Belastung eine berührungsfreie schwebende Führung eines in einer Schiebeführung gehaltenen Türflügels oder dergleichen bewirken, wobei neben den stationär angeordneten Magneten der Schiebeführung ein Ständer eines Linearmotors angeordnet ist, dessen Läufer an der Schiebetür angeordnet ist. Durch die gewählte V-förmige Anordnung der Permanentmagnete der offenbarten permanent erregten magnetischen Trageinrichtung kann keine seitlich stabile Führungsbahn realisiert werden, weswegen eine relativ komplizierte Anordnung und Ausgestaltung von Ständer und Läufer erforderlich ist. Diese Anordnung verteuert eine solche Schiebetürführung enorm.

Aus der WO 00/50719 A1 ist ein kombiniertes Lager- und Antriebssystem für eine automatisch betriebene Tür bekannt, bei der ein permanent erregtes magnetisches Tragsystem symmetrisch aufgebaut ist und ortsfeste und ortsveränderbare Magnetreihen aufweist, die jeweils in einer Ebene angeordnet sind, wobei sich das Tragsystem in einem labilen Gleichgewicht befindet, und bei dem das Tragsystem symmetrisch angeordnete seitliche Führungselemente aufweist, die rollenförmig gelagert sein können. Aufgrund der hierdurch erreichten seitlich stabilen Führungsbahn ergibt sich eine einfache Ausgestaltung und Anordnung von Ständer und Läufer eines in einem gemeinsamen Gehäuse untergebrachten Linearmotors, nämlich die Möglichkeit, Ständer und Läufer des Linearmotors in Bezug auf das Tragsystem beliebig anordnen zu können und hinsichtlich der Formgebung von Ständer und Läufer nicht durch das Tragsystem beschränkt zu sein.

Diesen beiden Lagersystemen gemeinsam ist, dass sie nach dem Prinzip der abstoßenden Kraftwirkung arbeiten, welches Wirkprinzip einen stabilen Schwebezustand ohne aufwendige elektrische Regeleinrichtung ermöglicht. Nachteilig hieran ist jedoch, dass sowohl mindestens eine ortsfeste als auch mindestens eine ortsveränderbare Magnetreihe vorhanden sein müssen, d. h. über den gesamten Weg der Schiebeführung bzw. des Lagers der automatisch betriebenen Tür und an dem entlang dieser Führung beweglichen Tragschlitten für die Tür Magnete angeordnet sein müssen, wodurch sich ein solches System, das sich aufgrund des Wegfalls der mechanischen Reibung zum Tragen der Tür durch extreme Leichtgängigkeit und geräuschlose Arbeitsweise auszeichnet und nahezu verschleiß- und wartungsfrei ist, in der Herstellung sehr teuer wird. Dieser Effekt wird durch die in der Linear-Antriebseinheit vorgesehenen Magnete weiter verstärkt.

Aus der DE 196 18 518 C1 ist weiter ein elektromagnetisches Antriebssystem für magnetische Schwebe- und Tragsysteme bekannt, bei dem durch eine geeignete Anordnung von Dauermagnet und ferromagnetischem Material ein stabiler Schwebe- und Tragzustand erreicht wird. Hierzu versetzt der Dauermagnet das ferromagnetische Material in den Zustand einer magnetischen Teilsättigung. Elektromagnete sind so angeordnet, dass die Dauermagneten allein durch eine Änderung der Sättigung in der Tragschiene bewegt werden, und die Spulenkerne sind in die dauermagnetische Teilsättigung, die zum Schwebe- und Tragezustand führt, mit einbezogen.

Weiter zeigt die WO 94/13055 einen Ständerantrieb für einen elektrischen Linearantrieb und eine mit einem solchen Ständer versehene Tür, die mittels Magneten im Türsturz eines Rahmens aufgehängt ist. Hierfür sind an der Türfüllung mehrere Magnete oder Magnetgruppen angeordnet, deren magnetische Feldstärke so groß ist, dass eine Anziehungskraft zu einer Führungsplatte erreicht wird, die an der Unterseite des Türsturzes angeordnet ist, wobei die Anziehungskraft ausreicht, um das Gewicht der Türfüllung anzuheben.

Den beiden in diesen Druckschriften beschriebenen Systemen ist gemeinsam, dass sie aufgrund der notwendigen Anzahl von mit Dauermagneten in Wechselwirkung stehenden Spulen über den gesamten Verfahrensweg in der Herstellung sehr teuer werden.

Aus der US 4439698 ist ein Gerät für die Erzeugung einer Linearen Bewegung bekannt wobei jedes von eine Mehrzahl von Solenoidelemente ein Magnetfeld erstellt um ein ferromagnetisches Mitglied anzuziehen.

Es ist daher die Aufgabe der Erfindung, eine Schiebetür mit einem Linearmotor-Antrieb, insbesondere einem Magnetschiebetürantrieb, insbesondere für ein kombiniertes magnetisches Trag- und Antriebssystem mit einer permanent erregten magnetischen Trageinrichtung mit einer Magnetreihe und einer Linear-Antriebseinheit, so weiterzuentwickeln, dass die zuvor genannten Vorteile bei geringen Herstellungskosten bestehen bleiben.

Gelöst wird diese Aufgabe mit den im Patentanspruch 1 angegebenen Merkmalen. Vorteilhafte Ausgestaltungen des Gegenstandes des Patentanspruches 1 sind in den Unteransprüchen angegeben.

Die erfindungsgemäße Schiebetür, mit einem magnetischen Antriebssystem für mindestens einen Türflügel, umfasst eine Linear-Antriebseinheit, die mindestens eine in Antriebseinrichtung in bestimmten Abständen unterbrochene Reihe von weichmagnetischen Elementen und mindestens eine aus mehreren Einzelspulen bestehende Spulenanordnung aufweist, die bei entsprechender Anordnung der Einzelspulen eine Wechselwirkung mit der mindestens einen Reihe von weichmagnetischen Elementen bewirkt, welche Wechselwirkung Vorschubkräfte hervorruft. Diese Schiebetür weist gegenüber dem Stand der Technik den Vorteil auf, dass trotz eines Verzichts auf die in der Linear-Antriebseinheit nach dem Stand der Technik verwendeten Magneten ein guter Wirkungsgrad erreicht werden kann. Hier resultiert der Vorschub aus dem Wechsel von Luft, d. h. magnetisch schlecht leitend, und weichmagnetischem Werkstoff, d. h. magnetisch gut leitend. Ein Vortrieb wird also durch magnetische Anziehungskräfte erzeugt. Der Verzicht auf die nach dem Stand der Technik verwendeten Magnete führt bei einem von dem Tragsystem getrennten Antriebssystem zu einer Kosteneinsparung, insbesondere, wenn die Spulenanordnung an dem Türflügel mitlaufend angebracht wird, und der Möglichkeit, das Antriebssystem und das Tragsystem unabhängig voneinander zu optimieren.

Die erfindungsgemäße Schiebetür weist eine magnetische Trageinrichtung auf, die mindestens eine Magnetreihe, mindestens ein in anziehender Kraftwirkung mit mindestens einer der mindestens einen Magnetreihe stehendes weichmagnetisches Tragelement und ein Führungselement aufweist, das einen bestimmten spaltförmigen Abstand zwischen der mindestens einen Magnetreihe und dem Tragelement gewährleistet. Diese Kombination weist gegenüber dem beschriebenen Stand der Technik den Vorteil auf, dass das Tragelement aufgrund der ausgenutzten anziehenden Kraftwirkung nicht hartmagnetisch sein muss. Da weiter ein Führungselement vorgesehen ist, welches einen Abstand zwischen der mindestens einen Magnetreihe und dem Tragelement gewährleistet, braucht trotz Ausnutzung eines instabilen Gleichgewichtszustandes keine elektrische oder elektronische Regeleinrichtung vorgesehen zu werden.

Bei der erfindungsgemäß verwendeten magnetischen Trageinrichtung ist das Tragelement durch die in bestimmten Abständen unterbrochene Reihe von weichmagnetischen Elementen ausgebildet. Die erfindungsgemäße Linear-Antriebseinheit und die erfindungsgemäß verwendete magnetische Trageinrichtung sind dabei integriert ausgebildet, wodurch eine Reduzierung des Bauraumes erreicht wird.

Bei dem erfindungsgemäß verwendeten magnetischen Tragsystem ist vorzugsweise die mindestens eine Magnetreihe quer zur Tragrichtung und zur Antriebsrichtung magnetisiert, in der ein von der Trageinrichtung getragenes Element, z. B. ein Schiebetürelement, verfahren werden kann. Bei dieser vorzugsweisen Anordnung der Magnetisierung der mindestens einen Magnetreihe quer zur Tragrichtung ergibt sich eine besonders einfache konstruktive Ausgestaltung des Führungselementes, da dieses in diesem Fall unabhängig von einer Kraft geplant und ausgeführt werden kann, die von der Trageinrichtung erzeugt werden muss, um das getragene Element in einem Schwebezustand zu halten. Durch die gleichzeitige Ausgestaltung der mindestens einen in bestimmten Abständen unterbrochenen Reihe von weichmagnetischen Elementen parallel zu der mindestens einen Magnetreihe ist eine einfache Ausführung der Linear-Antriebseinheit möglich, da diese ebenfalls unabhängig von der von der Trageinrichtung zu erzeugenden Kraft geplant und ausgeführt werden kann. Erfindungsgemäß besteht die mindestens eine Magnetreihe vorzugsweise aus einzelnen Dauermagneten, da so durch die Aneinanderreihung einzelner kleinerer Magnete bei der Materialbeschaffung und damit im Herstellungsprozess der erfindungsgemäßen Trageinrichtung Kosten gespart werden können. Weiter können aufgrund dieser Ausgestaltung leichter Toleranzen ausgeglichen und magnetische Eigenschaften besser ausgenutzt werden. Anstelle einer Reihe von Magneten kann auch ein Einzelmagnet eingesetzt werden, wodurch das relativ schwierige Montieren der Vielzahl von Einzelmagneten entfällt.

Nach der Erfindung wechselt vorzugsweise die Magnetisierung der mindestens einen Magnetreihe in einer Längsrichtung der mindestens einen Magnetreihe in bestimmten Abständen das Vorzeichen. Dieses Merkmal, das besonders einfach bei einer aus einzelnen Dauermagneten bestehenden Magnetreihe verwirklicht werden kann, bewirkt eine bessere magnetische Wirkung, da zusammen mit der Trageinrichtung ein magnetischer Feldschluss der einzelnen Magnetisierungsbereiche, d. h. zwischen den einzelnen Dauermagneten, erzeugt wird. Auch bei dieser vorzugsweisen Ausführungsform kann anstelle der einzelnen Dauermagnete mit abwechselnder Polarisierung ein mehrpoliger Einzelmagnet eingesetzt werden. Weiter wird durch dieses Merkmal erreicht, dass das den spaltförmigen Abstand gewährleistende Führungselement bei auf beiden Seiten der Magnetreihe vorhandenem Tragelement keine großen Kräfte aufnehmen muss, da sich die zwischen der mindestens einen Magnetreihe und dem Tragelement in Magnetisierungsrichtung wirkenden Kräfte bestenfalls aufheben. Dieser Effekt wird mit einer steigenden Anzahl abwechselnder Polarisierungen stärker unterstützt, da damit sowohl Toleranzen in den Feldstärken einzelner Polarisierungsbereiche besser ausgeglichen werden als auch eine solche Überlagerung der von den einzelnen Polarisierungsbereichen jeweils erzeugten Kräften erfolgt, dass ein Feld erzeugt wird, welches dem Aufbau von Querkräften entgegenwirkt. Mindestens sollten drei aufeinander folgende Polarisierungsbereiche vorgesehen sein, damit eine bei lediglich zwei Polarisierungsbereichen der Magnetreihe mögliche Verkantung der Magnetreihe nicht eintritt, die bereits große Querkräfte erzeugen kann.

Das als unterbrochene Reihe von weichmagnetischen Elementen ausgebildete Tragelement kann ortsfest ausgebildet sein, wenn die mindestens eine Spulenanordnung sowie die mindestens eine Magnetreihe ortsveränderlich, d. h. an dem sich bewegenden Element, z. B. einem Tragschlitten, der eine Tür trägt, angeordnet sind. Hier sind also die relativ teuren Elemente Einzelspulen und Permanentmagnete nicht über den gesamten Verfahrweg angeordnet, was zu einer preisgünstigen Lösung, insbesondere in Systemen führt, in denen lange Verfahrwege realisiert werden, die nicht vollständig mit Türelementen abgedeckt sein müssen.

Nach einer bevorzugten Ausführungsform der erfindungsgemäß verwendeten magnetischen Trageinrichtung weist jedes Tragelement vorzugsweise zwei Tragschienen auf, von denen die eine Tragschiene mit dem bestimmten Abstand zu einer ersten Seite einer Magnetreihe der mindestens einen Magnetreihe angeordnet ist und die andere Tragschiene mit dem gleichen oder einem anderen bestimmten spaltförmigen Abstand zu einer der ersten Seite der Magnetreihe gegenüberliegenden zweiten Seite der Magnetreihe oder einer weiteren Magnetreihe der mindestens einen Magnetreihe angeordnet ist.

Nach einer anderen bevorzugten Ausführungsform der erfindungsgemäß verwendeten magnetischen Trageinrichtung weist jedes Tragelement eine U-förmige Tragschiene mit einem Bodenbereich und zwei Seitenbereichen auf, wobei der Bodenbereich die beiden Seitenbereiche verbindet und eine Magnetreihe der mindestens einen Magnetreihe wenigstens teilweise so innerhalb der U-förmigen Tragschiene geführt wird, dass wenigstens Teile einer Innenfläche des einen Seitenbereiches mit dem bestimmten Abstand zu einer ersten Seite der Magnetreihe angeordnet sind und wenigstens Teile einer Innenfläche des anderen Seitenbereiches mit dem gleichen oder einem anderen bestimmten spaltförmigen Abstand zu einer der ersten Seite der Magnetreihe gegenüberliegenden zweiten Seite der Magnetreihe oder einer weiteren Magnetreihe der mindestens einen Magnetreihe angeordnet sind.

Gemäß diesen beiden bevorzugten Ausführungsformen wirken die zwischen den Polflächen der mindestens einen Magnetreihe und den diesen gegenüberliegenden Seiten der Tragschiene(n) entstehenden Querkräfte einander entgegen und heben sich bei günstiger Auslegung nahezu auf. Das führt dazu, dass nach diesen bevorzugten Ausführungsformen der erfindungsgemäß verwendeten Trageinrichtung eine besonders einfache und unkomplizierte Auslegung des Führungselementes ermöglicht wird, da dieses zum Gewährleisten des Abstandes zwischen der mindestens einen Magnetreihe und dem korrespondierenden Tragelement nahezu keine Querkräfte aufnehmen muss.

Vorzugsweise wird der Abstand zwischen Magnetreihe und Tragelement so klein wie möglich gehalten.

Nach der Erfindung sind das in der erfindungsgemäß verwendeten magnetischen Trageinrichtung verwendete mindestens eine Tragelement vorzugsweise ortsfest und die mindestens eine Magnetreihe ortsveränderlich angeordnet, d. h. im Fall einer Schiebetür ist diese an der mindestens einen Magnetreihe aufgehängt, wohingegen das mindestens eine Tragelement eine Führung für das Türelement oder die Türelemente einer mehrflügeligen Schiebetür bildet. Natürlich ist auch die Ausgestaltung des mindestens einen Tragelementes ortsveränderlich und der mindestens einen Magnetreihe ortsfest, wie auch eine Kombination dieser beiden Varianten möglich.

Das mindestens eine Tragelement ist nach der Erfindung vorzugsweise weichmagnetisch, wodurch besonders niedrige Kosten hinsichtlich dieses Elementes erreicht werden.

Das Führungselement umfasst nach der Erfindung vorzugsweise Rollen, Wälz- und/oder Gleitkörper.

Nach der Erfindung besteht die mindestens eine Magnetreihe vorzugsweise aus einem oder mehreren Hochleistungsmagneten, vorzugsweise Seltenenerd-Hochleistungsmagneten, weiter vorzugsweise aus Neodym-Eisen-Bor (NeFeB) bzw. Samarium-Cobalt (Sm₂Co) oder kunststoffgebundenen Magnetwerkstoffen. Durch die Verwendung von solchen Hochleistungsmagheten lassen sich wegen der höheren Remanenzinduktion wesentlich höhere Kraftdichten erzeugen als mit Ferrit-Magneten. Demzufolge lässt sich das Magnetsystem bei gegebener Tragkraft mit Hochleistungsmagneten geometrisch klein und damit platzsparend aufbauen. Die gegenüber Ferrit-Magneten höheren Materialkosten der Hochleistungsmagnete werden durch das vergleichsweise geringe Magnetvolumen zumindest kompensiert.

Bei der erfindungsgemäß verwendeten Linear-Antriebseinheit ist ein Raster der Einzelspulen der Spulenanordnung vorzugsweise unterschiedlich zu einem Raster der mindestens einen in bestimmten Abständen unterbrochenen Reihe von weichmagnetischen Elementen. Hierdurch werden ein besonders einfaches Anfahren des erfindungsgemäßen Antriebssystemes aus dem Stillstand sowie die Möglichkeit einer besonders gleichförmigen Bewegung ermöglicht.

In der erfindungsgemäß verwendeten Linear-Antriebseinheit sind vorzugsweise die Spulenanordnung ortsfest und die mindestens eine in bestimmten Abständen unterbrochene Reihe von weichmagnetischen Elementen ortsveränderlich angeordnet, wodurch bei einem geringen Bewegungsweg, wie er normalerweise bei dem Antrieb von Türflügeln vorliegt, keine übermäßigen erhöhten Kosten entstehen, aber der Läufer und damit das gesamte bewegliche Element des erfindungsgemäßen kombinierten magnetischen Trag- und Antriebssystemes passiv ausgelegt werden kann.

Das erfindungsgemäße Antriebssystem oder kombinierte Trag- und Antriebssystem wird zum Antrieb mindestens eines Türflügels einer Schiebetür eingesetzt, die vorzugsweise als Bogenschiebetür oder Horizontal-Schiebewand ausgebildet ist. Es kann neben diesem Einsatz auch zum Antrieb von Torflügeln oder in Zuführeinrichtungen, Handlingseinrichtungen oder Transportsystemen eingesetzt werden.

Die Erfindung wird nun anhand von schematisch dargestellten Ausführungsbeispielen näher beschrieben.

Dabei zeigen:
- Figur 1:: einen Querschnitt einer ersten bevorzugten Ausführungsform der erfindungsgemäß bevorzugt verwendeten magnetischen Trageinrichtung in verschiedenen Belastungszuständen,
- Figur 2:: die Tragkraftkennlinie der magnetischen Trageinrichtung nach der in Figur 1 gezeigten ersten bevorzugten Ausfüh- rungsform,
- Figur 3:: den Querkraftverlauf der magnetischen Trageinrichtung nach der in Figur 1 gezeigten ersten bevorzugten Ausführungs- form,
- Figur 4:: eine Schnittdarstellung einer Draufsicht der magnetischen Trageinrichtung nach der in Figur 1 gezeigten ersten bevor- zugten Ausführungsform,
- Figur 5:: eine Schnittdarstellung einer Draufsicht einer ersten bevor- zugten Ausführungsform des erfindungsgemäßen Antriebs- systemes,
- Figur 6:: eine elektrische Verschaltung der Spulen der Linear- Antriebseinheit einer zweiten bevorzugten Ausführungsform des erfindungsgemäßen Antriebssystemes,
- Figur 7:: ein Diagramm zur Erläuterung einer ersten Möglichkeit des Spannungsverlaufes an den wie in Figur 6 gezeigt verschal- teten Spulen der zweiten bevorzugten Ausführungsform des erfindungsgemäßen Antriebssystemes,
- Figur 8:: ein Diagramm zur Erläuterung einer zweiten Möglichkeit des Spannungsverlaufes an den wie in Figur 6 gezeigt verschal- teten Spulen der zweiten bevorzugten Ausführungsform des erfindungsgemäßen Antriebssystemes, .
- Figur 9:: ein Diagramm zur Erläuterung einer dritten Möglichkeit des Spannungsverlaufes an den wie in Figur 6 gezeigt verschal- teten Spulen der zweiten bevorzugten Ausführungsform des erfindungsgemäßen und Antriebssystemes und
- Figur 10:: eine Schnittdarstellung einer Draufsicht einer dritten bevor- zugten Ausführungsform des erfindungsgemäßen Antriebs- systemes.

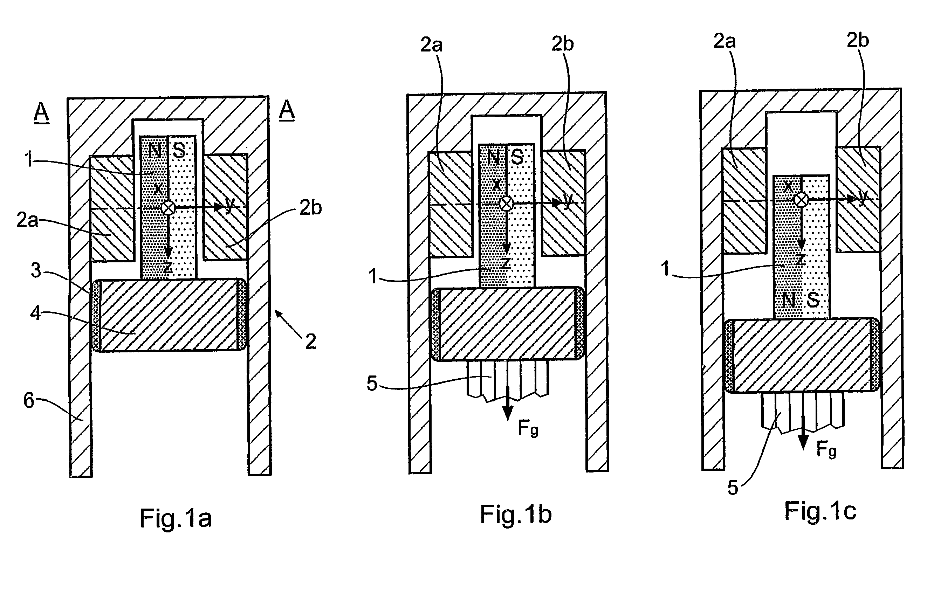

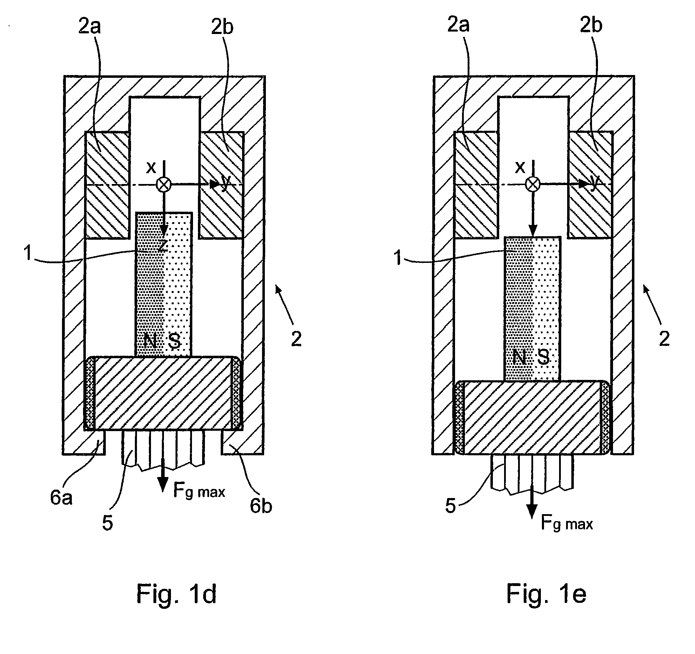

Die Figur 1 zeigt eine erste bevorzugte Ausführungsform der erfindungsgemäß verwendeten magnetischen Trageinrichtung im Querschnitt. Zur Erläuterung ist ein Koordinatensystem eingezeichnet, bei dem eine x-Richtung eine Fahrtrichtung eines an der erfindungsgemäßen Trageinrichtung aufgehängten Türflügels 5 darstellt. Die Richtung der auf die magnetische Trageinrichtung wirkenden Querkräfte ist die y-Richtung, und die durch das Gewicht der aufgehängten Türflügel 5 bedingte vertikale Magnetauslenkung nach unten ist in z-Richtung eingezeichnet.

Eine an einem Tragschlitten 4 befestigte Magnetreihe 1 wird durch ein an dem Tragschlitten 4 vorgesehenes mechanisches Führungselement 3, das mit einem Gehäuse 6 der Trageinrichtung zusammenwirkt, in horizontaler Richtung zentriert zwischen weichmagnetischen Tragschienen 2a, 2b, die das Tragelement 2 bilden, zwangsgeführt, während sie in vertikaler Richtung und in Fahrtrichtung (x) des Türflügels 5 frei verschiebbar ist. Durch die so erzwungene Symmetrie heben sich die in y-Richtung an den Magneten 1 a, 1b, 1 c, 1 d angreifenden Querkräfte weitgehend auf. In vertikaler Richtung (z-Richtung) nehmen die Magnete 1a, 1b, 1c, 1d nur im lastfreien Zustand, also ohne an dem Tragschlitten 4 befestigte Last, wie in der Figur 1 a gezeigt, eine symmetrische Lage ein.

Bei Belastung der Magnete 1a, 1b, 1c, 1d mit einer Gewichtskraft F_{g}, z. B. durch den an dem Tragschlitten 4 befestigten Türflügel 5, werden diese in vertikaler Richtung aus der in Figur 1a gezeigten symmetrischen Lage über einen in Figur 1b gezeigten Zwischenzustand in eine in Figur 1c gezeigte Gleichgewichtslage bewegt, die durch die zu tragende Gewichtskraft F_{g} und eine magnetische Rückstellkraft zwischen den Magneten 1a, 1b, 1c, 1d der Magnetreihe 1 und den Tragschienen 2a, 2b des Tragelementes 2, im Folgenden auch als Tragkraft F(z) bezeichnet, bestimmt ist. Die Ursache dieser Rückstellkraft sind die zwischen den Magneten 1a, 1b, 1c, 1d der Magnetreihe 1 und den Tragschienen 2a, 2b wirkenden magnetischen Anziehungskräfte, wobei nur der Teil der Magnete 1a, 1b, 1c, 1d, der zwischen den Tragschienen 2a, 2b nach unten heraustritt, zu dieser magnetischen Tragkraft beiträgt. Da dieser Teil mit größer werdender vertikaler Auslenkung zunimmt, steigt die magnetische Tragkraft dem Betrag nach kontinuierlich mit der Auslenkung an.

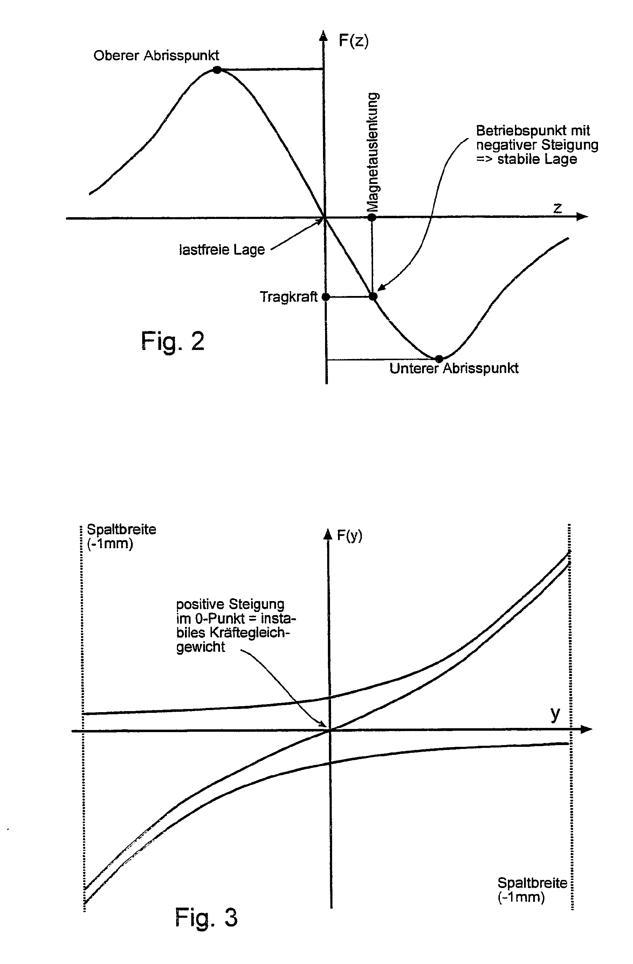

Figur 2 zeigt die Abhängigkeit zwischen der vertikalen Auslenkung der Magnetreihe 1 und der magnetischen Tragkraft in einer Kennlinie, d. h. die Tragkraftkennlinie der Trageinrichtung gemäß der in Figur 1 gezeigten Ausführungsform. Auf der Abszisse ist die vertikale Auslenkung z nach unten, z. B. in mm, und auf der Ordinate die korrespondierende erzeugte magnetische Tragkraft F(z), z. B. in Newton, angegeben. Der Verlauf der Tragkraftkennlinie ist durch einen oberen und einen unteren Abrisspunkt gekennzeichnet, die jeweils erreicht werden, wenn die Magnete zwischen den Tragschienen nach oben bzw. nach unten vollständig heraustreten, wie es für den Fall nach unten in Figur 1e gezeigt ist. Wird diese kritische Auslenkung kraftbedingt überschritten, so schwächen sich die Rückstellkräfte durch den zunehmenden Abstand zu den Tragschienen 2a, 2b ab, wodurch in diesen Bereichen kein stabiler Gleichgewichtszustand zwischen der Tragkraft F(z) und der durch die Last bedingten Gewichtskraft F_{g} erreicht werden kann.

In der Praxis kann ein solches Abreißen der Tragkraft F(z) durch die Gewichtskraft F_{g} der Türflügelmasse durch eine mechanische Begrenzung der möglichen Auslenkung der Magnetreihe 1 zuverlässig verhindert werden, wie sie beispielhaft in Figur 1d gezeigt ist. Hier umfasst das die Tragschienen 2a, 2b aufnehmende und eine horizontale Führung für das Führungselement 3 bietende Gehäuse 6 gleichzeitig zwei jeweils an seinen unteren Enden angeordnete Vorsprünge 6a, 6b, die eine mechanische Begrenzung der möglichen Auslenkung des Tragschlittens 4 und somit der an diesem starr befestigten Magnetreihe 1 in z-Richtung sind.

Zwischen dem oberen Abrisspunkt und dem unteren Abrisspunkt verläuft die Tragkraftkennlinie nahezu linear, wobei bei einer positiven Auslenkung der Magnetreihe 1, d. h. einer Auslenkung nach unten, die durch den am Tragschlitten 4 befestigten Türflügel 5 erfolgt, von dem Ursprung des Koordinatensystemes zwischen vertikaler Auslenkung z der Magnetreihe 1 und magnetischer Tragkraft F(z) bis zu dem unteren Abrisspunkt auf der Tragkraftkennlinie Betriebspunkte mit negativer Steigung durchfahren werden, in denen sich eine jeweilige stabile Lage der Magnetreihe 1 zwischen den Tragschienen 2a, 2b, bedingt durch die auf die Magnetreihe 1 wirkende Gewichtskraft F_{g} und die betragsgleiche, in entgegengesetzte Richtung wirkende magnetische Tragkraft F(z), einstellen kann.

Bei strenger Symmetrie der beschriebenen magnetischen Trageinrichtung um die vertikale Mittelachse (z-Achse), die sowohl von der Anordnung der Trageinrichtung als auch dem mechanischen Führungselement 3 abhängt, heben sich die horizontalen Magnetkraft-Komponenten in Querrichtung, d. h. in y-Richtung, vollständig auf. Verlässt die Magnetreihe 1 toleranzbedingt diese exakte Mittellage, so stellt sich aufgrund unterschiedlich starker Anziehungskräfte zu den beiden Tragschienen 2a, 2b eine auf die Magnetreihe 1 wirkende Querkraft F(y) ein.

Die Figur 3 zeigt für eine Spaltbreite von z. B. -1 mm bis +1 mm einen Querkraftverlauf F(y) in Abhängigkeit von einer seitlichen Verschiebung y der Magnete 1a, 1b, 1c, 1d, der über den ganzen Verlauf eine positive Steigung hat. Das bedeutet, dass im Null-Punkt des Koordinatensystemes, der zur Mittellage der Magnetreihe 1 zwischen den Tragschienen 2a, 2b korrespondiert, ein instabiles Kräftegleichgewicht vorliegt. In allen anderen Punkten des Koordinatensystems herrscht eine resultierende Querkraft F(y).

Da in der Mittellage nur ein instabiles Kräftegleichgewicht vorliegt, muss das Führungselement 3 eine präzise mechanische Lagerung bieten, die die Magnetreihe 1 während der Fahrbewegung der Magnetreihe 1 in Bewegungsrichtung, d. h. in x-Richtung, exakt mittig zwischen den Tragschienen 2a, 2b führt. Je genauer diese Zentrierung realisiert werden kann, umso geringer sind die resultierende Querkraft F(y) und hiermit verbundene Reibungskräfte der mechanischen Lagerung.

Um die Trageigenschaften zu optimieren, sollte die Magnetbreite, d. h. die Abmessungen der Magnetreihe 1 bzw. von deren Einzelmagneten 1a, 1b, 1c, 1d in y-Richtung, möglichst groß sein, denn eine große Magnetbreite bewirkt eine große Feldstärke, die zu großen Tragkräften führt. Die Magnethöhe, also die Abmessungen der Magnetreihe bzw. von deren Einzelmagneten 1a, 1b, 1c, 1d in z-Richtung, sollte möglichst klein sein, denn kleine Magnethöhen erhöhen die Steifigkeit des Tragkraftfeldes durch Bündelung des Feldes.

Die Höhe der Tragschienen 2a, 2b sollte möglichst klein sein, günstig ist eine Tragschienenhöhe kleiner 1/2 der Magnethöhe, denn die Feldlinien der Dauermagnete werden gebündelt und hierdurch die Steifigkeit des magnetischen Tragsystems erhöht.

Die Anordnung sollte so gewählt werden, dass die weichmagnetischen Tragschienen 2a, 2b im Gleichgewichtszustand, in dem die magnetische Tragkraft F(z) betragsgleich der durch Belastung der Magnetreihe 1 mit dem Türflügel 5 hervorgerufenen Gewichtskraft F_{g} ist, vertikal unsymmetrisch um die Magnetreihe 1 liegen, und die Magnetreihe 1 sollte möglichst kontinuierlich sein, um Rastkräfte in Bewegungsrichtung, d. h. in x-Richtung, zu vermeiden.

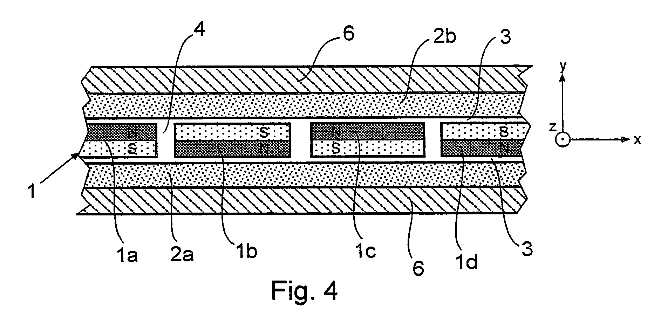

In Figur 4 ist eine Schnittdarstellung einer Aufsicht der in Figur 1a nach einer Schnittlinie A-A gezeigten Trageinrichtung nach der ersten bevorzugten Ausführungsform der Erfindung gezeigt. Es ist zu erkennen, dass die Magnetreihe 1 aus Einzelmagneten 1a, 1b, 1c, 1d besteht, die mit abwechselnder Magnetisierungsrichtung zwischen den beiden seitlich angeordneten Tragschienen 2a, 2b angeordnet sind, die aus einem weichmagnetischen Material bestehen. In dieser Ausführungsform, in der die Tragschienen 2a, 2b den feststehenden Teil der erfindungsgemäßen Trageinrichtung bilden, sind die Einzelmagnete 1a, 1b, 1c, 1d zur Bildung der Magnetreihe 1 an dem beweglichen Tragschlitten 4 befestigt und können zwischen den Schienen 2a, 2b in x- und z-Richtung verschoben werden. Bei einer vertikalen Verschiebung, d. h. einer Verschiebung in z-Richtung, um einen kleinen Weg, ca. 3 - 5 mm, aus der Null-Lage, d. h. der geometrischen Symmetrielage, ergibt sich, bedingt durch die Verwendung äußerst starker Dauermagnete, z. B. aus Nd-Fe-B, eine erhebliche Rückstellkraft, die zum Tragen eines Schiebetürflügels 5 mit einem Gewicht von ca. 80 kg/m geeignet ist. In der in Figur 4 gezeigten Anordnung, bei der die Dauermagnete 1a, 1b, 1c, 1d mit abwechselnder Magnetisierungsrichtung zwischen den beiden Tragschienen 2a, 2b angeordnet sind, wirkt sich der Feldschluss durch die Tragschienen 2a, 2b bei wechselseitiger Magnetisierungsrichtung der nebeneinander angeordneten Magnete postiv verstärkend aus.

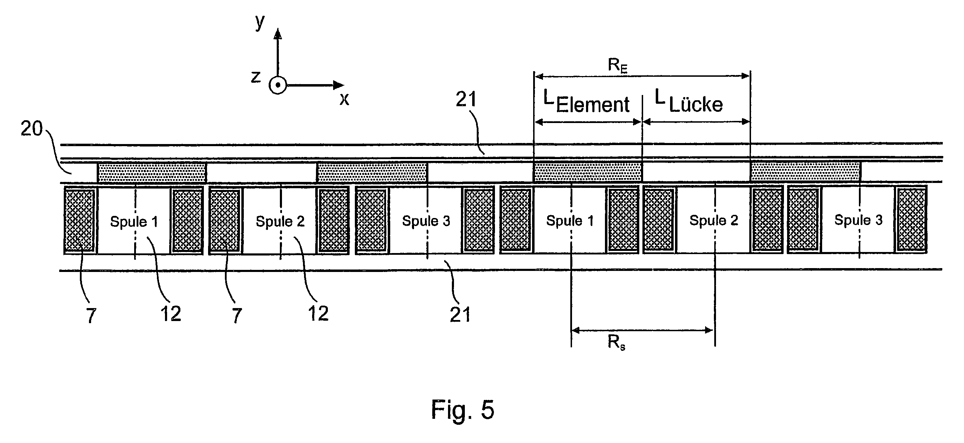

Die Figur 5 zeigt zwei Antriebssegmente einer ersten bevorzugten Ausführungsform des erfindungsgemäßen Antriebssystemes in einer geschnittenen Aufsicht, bei der der erfindungsgemäß verwendete magnetische Linearantrieb eine Reihe 20 weichmagnetischer Elemente aufweist, die an einem nicht gezeigten Tragschlitten 4 befestigt ist. Auf einer Seite der Reihe 20 weichmagnetischer Elemente des Linearantriebes sind Spulen 7 so angeordnet, dass sich ein jeweiliger Spulenkern 12 in Querrichtung, d. h. y-Richtung, erstreckt und das aus diesem austretende Magnetfeld in einen Luftspalt zwischen zwei weichmagnetischen Leisten 21 eintritt, in dem die Reihe 20 weichmagnetischer Elemente bewegbar angeordnet ist, wobei auch die Spulen 7 mit Spulenkernen 12 zwischen den weichmagnetischen Leisten 21 angeordnet sind. Es ist also so, dass eine Polfläche eines Spulenkerns 12 an einer weichmagnetischen Leiste 21 anliegt und die andere Polfläche mit einem Luftspalt zu der anderen weichmagnetischen Leiste 21 beabstandet ist, in welchem Luftspalt die weichmagnetischen Elemente der Reihe 20 weichmagnetischer Elemente der Linear-Antriebseinheit angeordnet sind. Die weichmagnetischen Leisten 21 dienen dem besseren Magnetfeldschluss der von den Spulen 7 mit Spulenkernen 12 erzeugten Magnetfelder.

Um einen kontinuierlichen relativen Vorschub zwischen der Reihe 20 weichmagnetischer Elemente des Linearantriebes und Spulen 7 zu gewährleisten, sind die Spulen 7 mit ihren jeweiligen Spulenkernen 12 in unterschiedlichen relativen Positionen zum Raster der weichmagnetischen Elemente angeordnet. Je mehr unterschiedliche Relativpositionen ausgebildet werden, umso gleichmäßiger lässt sich die Schubkraft über den Verfahrweg realisieren. Da andererseits jede Relativposition einer elektrischen Phase eines für den Linearantrieb benötigten Ansteuersystemes zuzuordnen ist, sollten möglichst wenig elektrische Phasen zum Einsatz kommen. Aufgrund des zur Verfügung stehenden dreiphasigen Drehstromnetzes ist ein dreiphasiges System, wie es beispielhaft in Figur 5 gezeigt ist, sehr kostengünstig aufzubauen.

Hierbei besteht ein jeweiliges Antriebssegment der Linear-Antriebseinheit aus drei Spulen 7, die eine Ausdehnung von drei Längeneinheiten in Antriebsrichtung, d. h. x-Richtung, aufweisen, wobei also zwischen den Mittelpunkten benachbarter Spulenkerne 12 ein Raster R_{S} = 1 Längeneinheit liegt. Die Länge eines weichmagnetischen Elementes der Reihen 20 weichmagnetischer Elemente der Linear-Antriebseinheit in Antriebsrichtung und die Länge der zwischen den Einzelelementen der Reihe 20 weichmagnetischer Elemente der Linear-Antriebseinheit liegenden Lücke ist hier so gewählt, dass Länge eines Elements L_{Element} + Länge einer Lücke L_{Lücke} = Elementraster R_{E} = 6/4 Längeneinheit (= 6/4 R_{S}) ergibt.

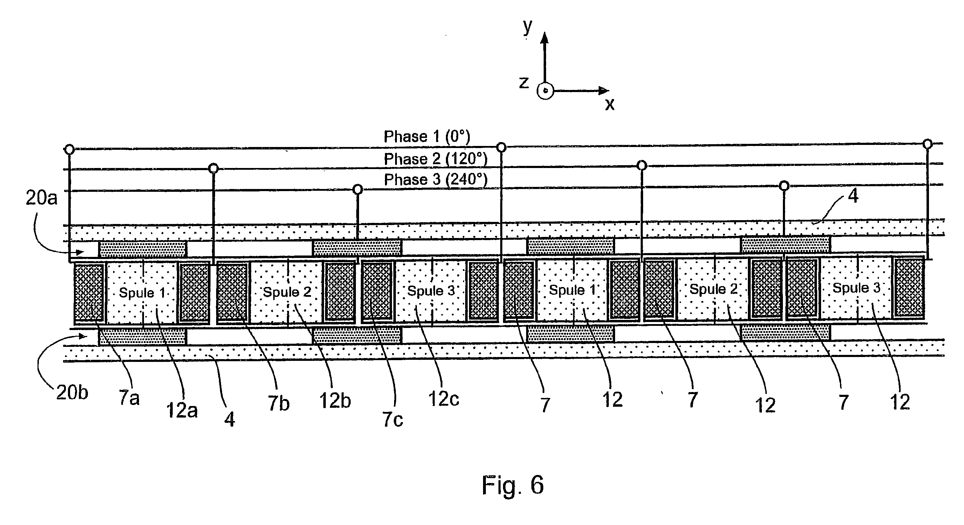

Figur 6 zeigt die Verschaltung der Spulen der in Figur 5 gezeigten beiden Antriebssegmente der erfindungsgemäß verwendeten Linear-Antriebseinheit, wobei die Spulen 7 mit Spulenkernen 12 hier in einer zweiten bevorzugten Ausführungsform der erfindungsgemäßen Linear-Antriebseinheit zwischen zwei Reihen 20a, 20b weichmagnetischer Elemente so angeordnet sind, dass sich ein jeweiliger Spulenkern 12 in Querrichtung, d. h. y-Richtung, erstreckt. Auf der den Spulen 7 mit Spulenkernen 12 jeweils abgewandten Seite der beiden Reihen 20a, 20b weichmagnetischer Elemente des Linearantriebes befindet sich ein Teil des Tragschlittens 4, an dem die beiden Reihen 20a, 20b weichmagnetischer Elemente des Linearantriebes befestigt sind. Hier ist eine erste Spule 7a mit einem ersten Magnetkern 12a zwischen eine erste Phase und eine zweite Phase eines aus drei Phasen bestehenden Drehstromsystems angeschlossen, dessen drei Phasen gleichmäßig verteilt sind, also die zweite Phase bei 120° und eine dritte Phase bei 240° liegen, wenn die erste Phase bei 0° liegt. Eine in positiver Antriebsrichtung, d. h. +x-Richtung, neben der ersten Spule 7a mit Magnetkern 12a liegende zweite Spule 7b mit Magnetkern 12b eines Antriebssegmentes der Linear-Antriebseinheit ist zwischen die zweite Phase und die dritte Phase geschaltet, und die in positiver Antriebsrichtung, d. h. +x-Richtung neben der zweiten Spule 7b mit Magnetkern 12b liegende dritte Spule 7c mit Magnetkern 12c ist zwischen die dritte Phase und die erste Phase geschaltet.

Ordnet man dem durch die weichmagnetischen Einzelelemente gebildeten Raster, analog zur Anordnung in einem zweipoligen Gleichstrommotor, Phasenwinkel zu, so lassen sich die linearen Spulenanordnungen in einem kreisförmigen Phasendiagramm abbilden. Da sich dieses sowohl magnetisch als Antriebswirkung auf die weichmagnetischen Einzelelemente als auch elektrisch als Ansteuerung der Spulen interpretieren lässt, kann durch dieses Diagramm der Zusammenhang zwischen Schaltzuständen und Antriebswirkung einheitlich beschrieben werden.

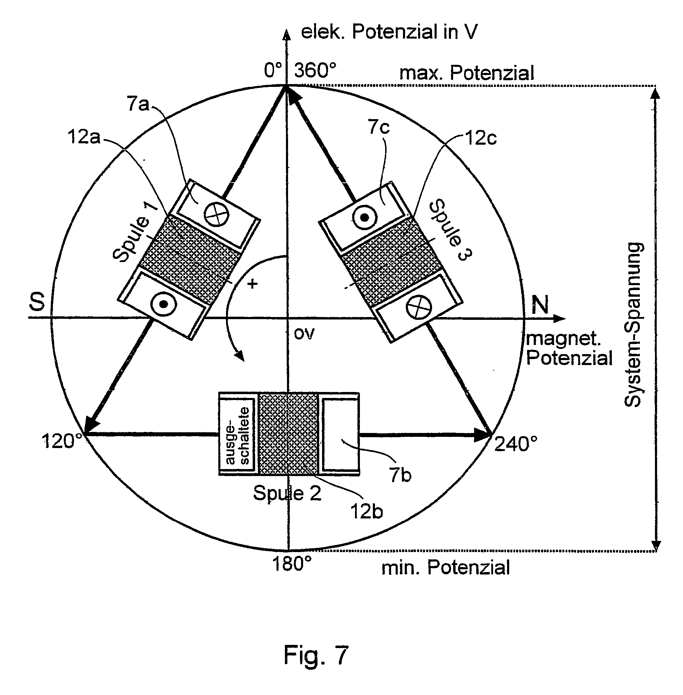

Ein solches kreisförmiges Phasendiagramm mit eingezeichneten Spulen ist in Figur 7 gezeigt. Hier ist auf der Ordinate das elektrische Potential in V und auf der Abszisse das magnetische Potential angegeben. Ein Kreis um den Ursprung dieses Koordinatensystemes, der ein Nullpotential sowohl für das elektrische Potential als auch das magnetische Potential darstellt, repräsentiert die Phasenlagen der an den jeweiligen Spulen anliegenden Spannung, wobei eine 0°-Phasenlage bei dem Schnittpunkt des Kreises mit der positiven Ordinate gegeben ist und sich die Phase im Gegenuhrzeigersinn zu einer 90°-Phasenlage in dem Schnittpunkt des Kreises mit der negativen Abszisse, der das magnetische Potential des Südpols darstellt, einer 180°-Phasenlage in dem Schnittpunkt des Kreises mit der negativen Ordinate, der das minimale Spannungspotential darstellt, einer 270°-Phasenlage in dem Schnittpunkt des Kreises mit der positiven Abszisse, der das magnetische Potential des Nordpols darstellt, bis zu einer 360°-Phasenlage, die gleich der 0°-Phasenlage ist, in dem Schnittpunkt des Kreises mit der positiven Ordinate, der das maximale Spannungspotential darstellt, ändert.

Wie in Figur 6 gezeigt, ist eine Beziehung gegeben, bei der die erste Spule 7a mit Magnetkern 12a zwischen einer 0°-Phasenlage und einer 120°-Phasenlage, die zweite Spule 7b mit Magnetkern 12b zwischen einer 120°-Phasenlage und einer 240°-Phasenlage und die dritte Spule 7c mit Magnetkern 12c zwischen einer 240°-Phasenlage und einer 360°-Phasenlage liegen. Bei Drehstrombetrieb drehen sich nun die Zeiger dieser Spulen entsprechend der Wechselfrequenz des Drehstroms im Uhrzeigersinn, wobei jeweils eine der elektrischen Potentialdifferenzen zwischen den auf die Ordinate projizierten Anfangs- und Endpunkten des Zeigers entsprechende Spannung an den Spulen anliegt.

Bei der magnetischen Interpretation des Phasendiagramms entspricht ein Phasendurchlauf von 180° einer Verschiebung des Läufers um den halben Abstand zwischen den Mittelpunkten zweier benachbarter weichmagnetischer Einzelelemente, also dem halben Elementraster R_{E}. Durch die weichmagnetischen Eigenschaften werden lediglich magnetische Anziehungskräfte ausgenutzt. Nach einem 360°-Phasendurchlauf beträgt die Läuferverschiebung R_{E}. Hierbei befinden sich die weichmagnetischen Einzelelemente relativ zum Raster R_{S} der Statorspulen wieder in Ausgangsposition, vergleichbar mit einer 360°-Umdrehung des Rotors eines zweipoligen Gleichstrommotors.

Für die elektrische Interpretation des Phasendiagramms wird die Ordinate betrachtet, auf der das anliegende elektrische Spannungspotential dargestellt ist. Bei 0° liegt das maximale Potential, bei 180° das minimale Potential und bei 90° bzw. 270° ein mittleres Spannungspotential an. Wie zuvor erwähnt, werden die Spulen im Diagramm durch Pfeile dargestellt, deren Anfangs- und Endpunkte die Kontaktierungen darstellen. Die jeweils anliegende Spulenspannung kann durch Projektion von Start- und Endpunkt der Pfeile auf der Potentialachse abgelesen werden. Durch die Pfeilrichtung werden die Stromrichtung und hierdurch die Magnetisierungsrichtung der Spule festgelegt.

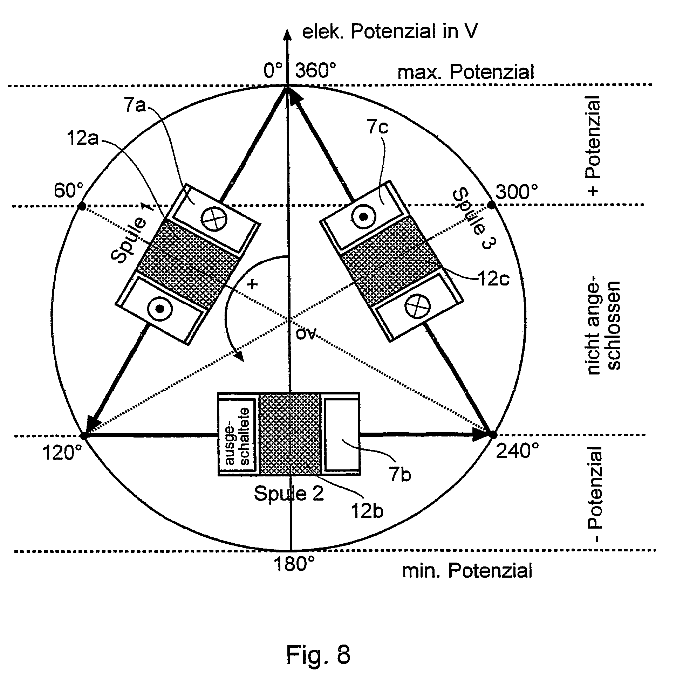

Anstelle einer kontinuierlichen sinusförmigen Spannungsquelle, die ein Phasendiagramm gemäß Figur 7 aufweist, kann aus Kostengründen auch eine Steuerung mit Rechteck-Charakteristik eingesetzt werden. In einem entsprechenden Phasendiagramm, das in Figur 8 gezeigt ist, ist die Rechteck-Charakteristik durch Schaltschwellen dargestellt. Hierbei können die Phasenanschlüsse jeweils die drei Zustände Pluspotential, Minuspotential und potentialfrei einnehmen. Dabei liegen das Pluspotential z. B. in einem Bereich zwischen 300° und 60° und das Minuspotential in einem Bereich von 120° bis 240° an, und die Bereiche zwischen 60° und 120° sowie 240° und 300° stellen den potentialfreien Zustand dar, in dem die Spulen nicht angeschlossen sind. Bei der Rechteckspannung-Ansteuerung ist der im Vergleich zur Sinus-Steuerung ungleichmäßigere Schub nachteilig.

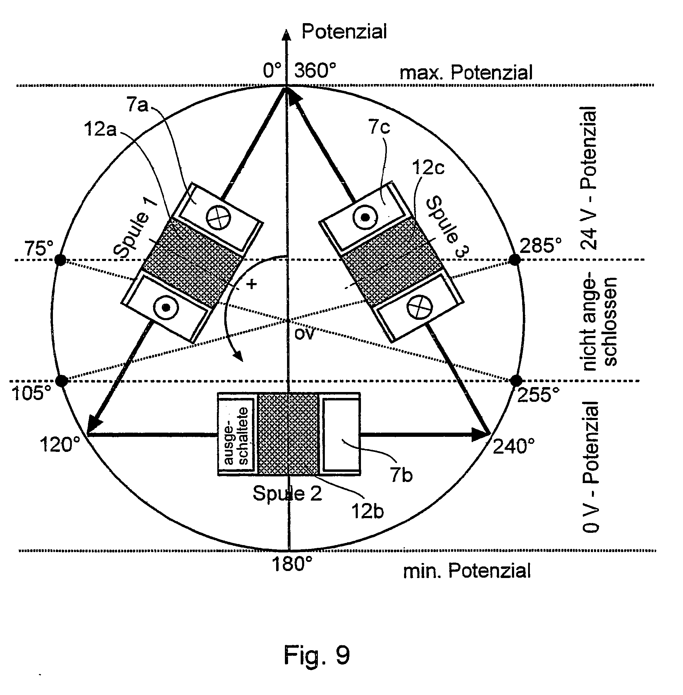

Es lässt sich natürlich noch eine große Zahl weiterer Spulenkonfigurationen und Potentialverteilungen aufbauen, z. B. die in Figur 9 gezeigte Potentialverteilung, bei der ein minimales Potential von 0 V in einem Bereich zwischen 105° und 255°, ein maximales Potential von 24 V in einem Bereich von 285° bis 75° und potentialfreie Bereiche von 75° bis 105° und von 255° bis 285° vorliegen.

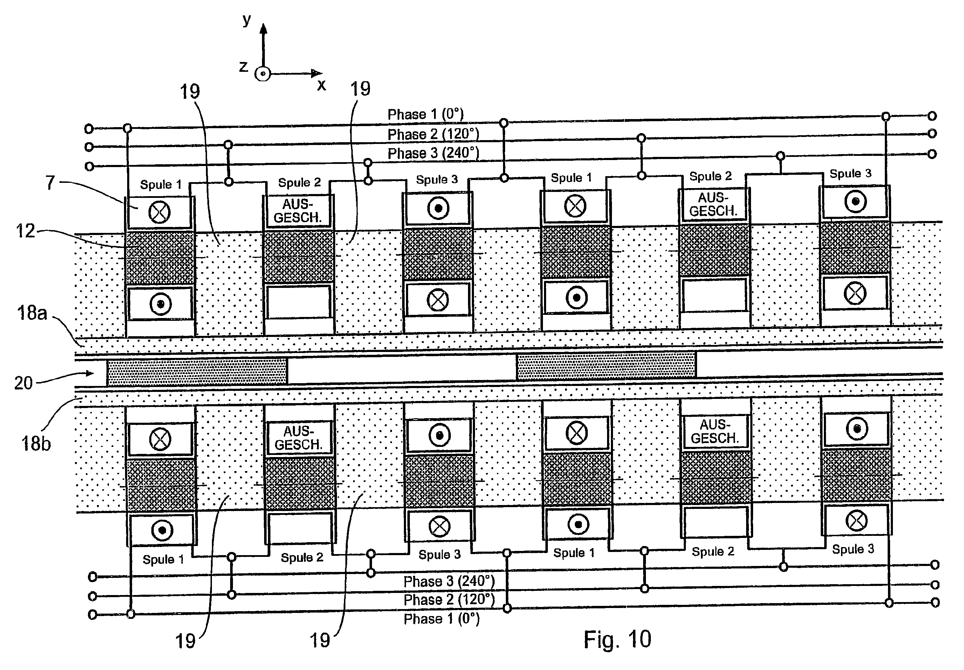

Weiter zeigt Figur 10 zwei Antriebssegmente einer dritten bevorzugten Ausführungsform des erfindungsgemäßen kombinierten Antriebssystemes in einer geschnittenen Aufsicht, bei der der erfindungsgemäß verwendete magnetische Linearantrieb eine dreiphasige Spulenanordnung aufweist, wobei eine Reihe 20 weichmagnetischer Elemente der Linear-Antriebseinheit zwischen Polschuhleisten 18a, 18b liegt, die jeweils alle auf einer Seite der Reihe 20 weichmagnetischer Elemente liegenden Polschuhe 19 von Spulen der Linear-Antriebseinheit verbinden. Die Polschuhe 19 verlaufen hier von den Endflächen der sich in Antriebsrichtung, d. h. x-Richtung, erstreckenden Spulenkerne 12 der Spulen 7 zu den Polschuhleisten 18a, 18b, um einen besseren Magnetfeldschluss zu gewährleisten. Die auf beiden Polseiten der Reihe 20 weichmagnetischer Elemente angeordneten Spulen sind symmetrisch in gleicher Weise angeschlossen, wie die zwischen den beiden Reihen 20a, 20b weichmagnetischer Elemente der zuvor beschriebenen Ausführungsform liegenden Spulen. In dieser Ausführungsform ist das Einzelelementraster R_{E} = 6/2 des Spulenrasters R_{S} gewählt. Durch diese Merkmale sind die charakteristischen Eigenschaften, dass jede Spule einen Phasenwinkel von 120° überbrückt und dass nach 360° (eine Umdrehung = R_{E}) alle drei Spulen eines Antriebssegmentes der Linear-Antriebseinheit durchlaufen sind, wobei - wie in der obigen Ausführungsform - ein Antriebssegment aus einer der elektrischen Phasen entsprechenden Anzahl von zusammen angesteuerten Spulen bzw. Spulenpaaren besteht.

Das Phasendiagramm dieser Anordnung entspricht dem der zuvor beschriebenen Anordnung, bei dem die im Phasendiagramm durch Pfeile dargestellten Spulen ein Dreieck bilden, wobei die Ecken dieses Dreieckes jeweils die Phasen der Ansteuerung darstellen. Hier durchlaufen die Ecken des Dreieckes bei einer Drehung um 360°, was einer Translationsbewegung des Läufers um drei Spulenraster entspricht, drei Spannungspotentiale: plus, minus und potentialfrei, wenn die in Figur 8 gezeigte Rechteckansteuerung gewählt wird. Da jede Spule einen Phasenwinkel von 120° überbrückt, wird bei einer Drehung um 60° das Potential einer Phase geändert, und eine der drei Phasen ist immer potentialfrei. Trägt man das Phasenpotential in Abhängigkeit von der Anzahl der 60°-Drehungsschritte in eine Tabelle ein, so ergibt sich das nachfolgende Phasenansteuerungs-Diagramm:

| | 0° | 60° | 120° | 180° | 240° | 300° |
|---|---|---|---|---|---|---|
| Phase 1 | + | 0 | - | - | 0 | + |
| Phase 2 | 0 | + | + | 0 | - | - |
| Phase 3 | - | - | 0 | + | + | 0 |

Durch eine Verschiebung der Schaltschwelle zu einem Minuspotential zwischen 105° und 255°, einem Pluspotential zwischen 285° und 75° und potentialfreien Zuständen zwischen 75° und 105° und 255° und 285°, ähnlich dem in Figur 9 gezeigten Zustand, lässt sich eine Ansteuerung mit einer Schrittweite von 30° realisieren. Hierbei können zwei Phasen das gleiche Potential haben, sodass an zugehöriger Spule keine Spannungsdifferenz anliegt und kein Strom fließt. In jedem zweiten 30°-Schritt ist jeweils eine Phase potentialfrei. Das entsprechende 30°-Phasenansteuerungs-Diagramm mit 12 Steuerschritten ergibt sich wie folgt:

| | 0° | 30° | 60° | 90° | 120° | 150° | 180° | 210° | 240° | 270° | 300° | 330° |
|---|---|---|---|---|---|---|---|---|---|---|---|---|
| Phase 1 | + | + | 0 | - | - | - | - | - | 0 | + | + | + |
| Phase 2 | 0 | + | + | + | + | + | 0 | - | - | - | - | - |
| Phase 3 | - | - | - | - | 0 | + | + | + | + | + | 0 | - |

Um die Vorschubeigenschaften zu optimieren, sollte die Breite der weichmagnetischen Elemente, d. h. die Abmessungen der Reihe 20 bzw. der Reihen 20a, 20b der Linear-Antriebseinheit bzw. von deren Einzelelementen in y-Richtung, möglichst klein sein, denn die Elemente wirken wie Luft dämpfend auf den Magnetkreis der Spulen. Die Elementhöhe, also die Abmessungen der Magnetreihe(n) 1, 1e, 1f bzw. von deren Einzelelementen in z-Richtung, sollte möglichst groß sein, denn eine große Elementhöhe führt zu einer großen Luftspaltfläche, die den magnetischen Widerstand des Spulenkreises reduzieren hilft. Gleichzeitig wird hierbei viel weichmagnetisches Material in den magnetischen Spulenkreis eingebracht, ohne zu große, den Magnetkreis sättigende Feldstärken zu erzeugen. Die Höhe der Polschuhe und/oder Spulenkerne 12 sollte möglichst groß sein, damit die Polschuhe bzw. Spulenkerne 12 mit den Einzelelementen eine möglichst große Überdeckung erreichen, sodass sich eine große Luftspaltfläche mit hoher Wirkkraft und kleinem magnetischen Widerstand ergibt. Die Anordnung dieser weichmagnetischen Bauelemente sollte eine möglichst große vertikale Überdeckung zwischen Spulenkernen bzw. Polschuhen erreichen.

Horizontal erfolgt vorzugsweise eine Aufteilung in magnetisch getrennte Einzelelemente, da ein Vorschub in der Bewegungsebene zeit- und ortsabhängig veränderliche Feldstärken und -richtungen bedingt (magnetische Wanderwelle) und magnetische Verbindungen der Spulenkerne oder Polschuhe untereinander zu magnetischem (Kurz-)Schluss und Leistungsverlusten führen.

Durch die erfindungsgemäße Trennung von dem dauermagnetischen Tragsystem und dem elektromagnetischen Linear-Antrieb in zwei Einzelsysteme können beste magnetische Trag-, Führungs- und Vorschub-Parametereigenschaften gewählt werden.

### Bezugszeichenliste

- 1, 1e, 1f: Magnetreihe
- 1a - d: Magnet
- 2: Tragelement
- 2a, b: Tragschiene
- 3: Führungselement
- 4: Tragschlitten
- 5: Türflügel
- 6: Gehäuse
- 7, 7a - c: Spule
- 12, 12a - c: Spulenkern
- 18a, 18b: Polschuhleiste
- 19: Polschuhe
- 20, 20a, 20b: Reihe weichmagnetischer Elemente
- 21: weichmagnetische Leisten

- R_{S} =: Raster
- L_{Element} =: Länge eines Elements
- L_{Lücke} =: Länge einer Lücke
- R_{M} =: Magnetraster
- L_{Magnet} =: Länge eines Magneten

- x: Türflügel-Fahrtrichtung
- y: Querrichtung
- z: vertikale Richtung bzw. Auslenkung

## Patentansprüche

1. Schiebetür mit einem magnetischen Antriebssystem für mindestens einen Türflügel (5), mit einer Linear-Antriebseinheit, die mindestens eine in Antriebsrichtung in bestimmten Abständen unterbrochene Reihe von weichmagnetischen Elementen (20, 20a, 20b) und mindestens eine aus mehreren Einzelspulen (7) bestehende Spulenanordnung aufweist, die bei entsprechender Ansteuerung der Einzelspulen (7) eine Wechselwirkung mit der mindestens einen Reihe von weichmagnetischen Elementen (20, 20a, 20b) bewirkt, die Vorschubkräfte hervorruft, und mit einer permanent erregten magnetischen Trageinrichtung, die mindestens eine Magnetreihe (1), mindestens ein in anziehender Kraftwirkung mit mindestens einer der mindestens einen Magnetreihe (1) stehendes Tragelement (2) und ein Führungselement (3) aufweist, das einen bestimmten spaltförmigen Abstand zwischen der mindestens einen Magnetreihe (1) und dem Tragelement (2) gewährleistet, wobei das mindestens eine Tragelement (2) durch die in bestimmten Abständen unterbrochene Reihe von weichmagnetischen Elementen (20, 20a, 20b) ausgebildet ist.

2. Schiebetür nach Anspruch 1, **dadurch gekennzeichnet, dass** das Tragelement (2) ortsfest und die mindestens eine Magnetreihe (1) ortsveränderlich angeordnet sind.

3. Schiebetür nach Anspruch 1, **dadurch gekennzeichnet, dass** die Spulenanordnung (7) ortsfest und die mindestens eine in bestimmten Abständen unterbrochene Reihe von weich-magnetischen Elementen ortsveränderlich angeordnet sind.

4. Schiebetür nach Anspruch 2, **dadurch gekennzeichnet, dass** die mindestens eine Magnetreihe (1) quer zu einer Tragrichtung (z) und zu einer Antriebsrichtung (x) magnetisiert ist.

5. Schiebetür nach einem der vorstehenden Ansprüche, **dadurch gekennzeichnet, dass** die mindestens eine Magnetreihe (1) aus einzelnen Dauermagneten (1a, 1b, 1c, 1d) besteht.

6. Schiebetür nach einem der vorstehenden Ansprüche, **dadurch gekennzeichnet, dass** eine Magnetisierung der mindestens einen Magnetreihe (1) in einer Längsrichtung der mindestens einen Magnetreihe (1) in bestimmten Abständen das Vorzeichen wechselt.

7. Schiebetür nach einem der vorstehenden Ansprüche, **dadurch gekennzeichnet, dass** das Tragelement (2) zwei Tragschienen (2a, 2b, 20a, 20b) aufweist, von denen die eine mit einem bestimmten Abstand zu einer ersten Seite einer der mindestens einen Magnetreihe (1) angeordnet ist und die andere mit dem gleichen bestimmten Abstand zu einer der ersten Seite der Magnetreihe (1) gegenüberliegenden zweiten Seite der Magnetreihe (1) angeordnet ist.

8. Schiebetür nach einem der vorstehenden Ansprüche, **dadurch gekennzeichnet, dass** jedes Tragelement (2) eine U-förmige Tragschiene mit einem Bodenbereich und zwei Seitenbereichen aufweist, wobei der Bodenbereich die beiden Seitenbereiche verbindet und eine Magnetreihe (1) der mindestens einen Magnetreihe wenigstens teilweise so innerhalb der U-förmigen Tragschiene geführt wird, dass wenigstens Teile einer Innenfläche des einen Seitenbereiches mit dem bestimmten Abstand zu einer ersten Seite der Magnetreihe (1) angeordnet ist und wenigstens Teile einer Innenfläche des anderen Seitenbereichs mit dem gleichen oder einem anderen bestimmten spaltförmigen Abstand zu einer der ersten Seite der Magnetreihe (1) gegenüberliegenden zweiten Seite der Magnetreihe (1) oder einer weiteren Magnetreihe der mindestens einen Magnetreihe angeordnet ist.

9. Schiebetür nach einem der vorstehenden Ansprüche, **dadurch gekennzeichnet, dass** das Tragelement (2) weichmagnetisch ist.

10. Schiebetür nach einem der vorstehenden Ansprüche, **dadurch gekennzeichnet, dass** das Führungselement (3) Rollen, Wälz- und/oder Gleitkörper umfasst.

11. Schiebetür nach einem der vorstehenden Ansprüche, **dadurch gekennzeichnet, dass** die mindestens eine Magnetreihe (1) aus einem oder mehreren Hochleistungsmagneten.

12. Schiebetür nach Anspruch 11, **dadurch gekennzeichnet, dass** der eine oder die mehreren Hochleistungsmagneten Seltenenerden-Hochleistungsmagneten sind.

13. Schiebetür nach Anspruch 12, **dadurch gekennzeichnet, dass** der eine oder die mehreren Seltenenerden-Hochleistungsmagneten vom Typ NeFeB oder Sm₂Co sind.

14. Schiebetür nach einem der vorstehenden Ansprüche, **dadurch gekennzeichnet, dass** ein Raster (R_{S}) der Einzelspulen (7) der Spulenanordnung unterschiedlich zu einem Raster (R_{E}) der mindestens einen in bestimmten Abständen unterbrochenen Reihe von weichmagnetischen Elementen (20, 20a, 20b) ist.

15. Schiebetür nach einem der vorstehenden Ansprüche, **dadurch gekennzeichnet, dass** die Schiebetür als Bogenschiebetür oder Horizontal-Schiebewand ausgebildet ist.

## Claims

1. A sliding door with a magnetic drive system for at least one door leaf with (5), with a linear drive unit, which has at least one row of soft-magnetic elements (20, 20a, 20b), which is interrupted at certain intervals in the driving direction, and at least one coil arrangement consisting of several individual coils (7), which, by appropriate activation of the individual coils (7), causes an interaction with the at least one row of soft-magnetic elements (20, 20a, 20b) generating advance forces, and with a permanently excited magnetic carrying device, which includes at least one row of magnets (1), at least one carrying element (2) being in action of attractive force with at least one of the at least one row of magnets (1), and a guide element (3), which guarantees a certain gap-shaped distance between the at least one row of magnets (1) and the carrying element (2), wherein the at least one carrying element (2) is configured by the row of soft-magnetic elements (20, 20a, 20b) which is interrupted at certain intervals.

2. A sliding door according to claim 1, **characterized in that** the carrying element (2) is disposed to be stationary and the at least one row of magnets (1) is disposed to be non-stationary.

3. A sliding door according to claim 1, **characterized in that** the coil arrangement (1) is disposed to be stationary and the at least one row of soft-magnetic elements, which is interrupted at certain intervals, is disposed to be non-stationary.

4. A sliding door according to claim 2, **characterized in that** the at least one row of magnets (1) is magnetized perpendicular to a carrying direction (z) and to a driving direction (x).

5. A sliding door according to any of the preceding claims, **characterized in that** the at least one row of magnets (1) consists of individual permanent magnets (1a, 1b, 1c, 1d).

6. A sliding door according to any of the preceding claims, **characterized in that** a magnetization of the at least one row of magnets (1) reverses the sign at certain intervals in a longitudinal direction of the at least one row of magnets (1).

7. A sliding door according to any of the preceding claims, **characterized in that** the carrying element (2) has two carrying rails (2a, 2b, 20a, 20b), the one of them being disposed at a certain distance to a first side of one of the at least one row of magnets (1) and the other one being disposed at the same certain distance to a second side of the row of magnets (1), opposite to the first side of the row of magnets (1).

8. A sliding door according to any of the preceding claims, **characterized in that** each carrying element (2) has a U-shaped carrying rail with a bottom section and two lateral sections, the bottom section connecting the two lateral sections, and a row of magnets (1) of the at least one row of magnets being at least partially guided in the U-shaped carrying rail in such a way that at least parts of an inner surface of the one lateral section are disposed at the certain distance to a first side of the row of magnets (1) and at least parts of an inner surface of the other lateral section are disposed at the same or at another certain gap-shaped distance to a second side of the row of magnets (1) or of another row of magnets of the at least one row of magnets (1), opposite the first side of the row of magnets.

9. A sliding door according to any of the preceding claims, **characterized in that** the carrying element (2) is soft-magnetic.

10. A sliding door according to any of the preceding claims, **characterized in that** the guiding element (3) comprises rollers, rolling and/or sliding members.

11. A sliding door according to one of the preceding claims, **characterized in that** at least one row of magnets (1) consists of one or several high energy magnets.

12. A sliding door according to claim 11, **characterized in that** the one or several high energy magnets are respectively rare-earth high energy magnets.

13. A sliding door according to claim 12, **characterized in that** the one or several rare-earth high energy magnets are respectively of the type NeFeB or Sm₂Co.

14. A sliding door according to any of the preceding claims, **characterized in that** a raster (R_{S}) of the individual coils (7) of the coil arrangement is different from a raster (R_{E}) of the at least one row of soft-magnetic elements (20, 20a, 20b) which is interrupted at certain intervals.

15. A sliding door according to any of the preceding claims, **characterized in that** the sliding door is configured as a curved sliding door or as a horizontal sliding wall.

## Revendications

1. Porte coulissante avec un système d'entraînement magnétique pour au moins un vantail de porte (5), avec une unité d'entraînement linéaire qui présente au moins une rangée d'éléments magnétiques doux (20, 20a, 20b), qui est interrompue à certains intervalles dans la direction d'entraînement, et au moins un aménagement de bobines composé de plusieurs bobines individuelles (7), lequel, lors d'une excitation appropriée des bobines individuelles (7), effectue une interaction avec ladite au moins une rangée d'éléments magnétiques doux (20, 20a, 20b), qui produit des forces d'avance, et avec un dispositif de suspension excité magnétiquement en permanence, qui présente au moins une rangée d'aimants (1), au moins un organe de suspension (2) qui est en action de force attirante avec au moins une de ladite au moins une rangée d'aimants (1), et un organe de guidage (3), qui garantit un certain intervalle en forme de fente entre ladite au moins une rangée d'aimants (1) et l'organe de suspension (2), ledit au moins un organe de suspension (2) étant aménagé par l'intermédiaire de la rangée d'éléments magnétiques doux (20, 20a, 20b) interrompue à certains intervalles.

2. Porte coulissante selon la revendication 1, **caractérisée en ce que** l'organe de suspension (2) est agencé de façon stationnaire et ladite au moins une rangée d'aimants (1) est agencée de façon mobile.

3. Porte coulissante selon la revendication 1, **caractérisée en ce que** l'aménagement de bobines (7) est agencé de façon stationnaire et **en ce que** ladite au moins une rangée d'éléments magnétiques doux (20, 20a, 20b), qui est interrompue à certains intervalles, est agencée de façon mobile.

4. Porte coulissante selon la revendication 2, **caractérisée en ce que** ladite au moins une rangée d'aimants (1) est magnétisée transversalement par rapport à une direction de suspension (z) et par rapport à une direction d'entraînement (x).

5. Porte coulissante selon l'une des revendications précédentes, **caractérisée en ce que** ladite au moins une rangée d'aimants (1) consiste en aimants permanents individuels (1a, 1b, 1c, 1d).

6. Porte coulissante selon l'une des revendications précédentes, **caractérisée en ce qu'**une magnétisation de ladite au moins une rangée d'aimants (1) alterne le signe à certains intervalles en direction longitudinale de ladite au moins une rangée d'aimants (1).

7. Porte coulissante selon l'une des revendications précédentes, **caractérisée en ce que** l'organe de suspension (2) présente deux rails de suspension (2a, 2b, 20a, 20b), l'un d'eux étant agencé à un certain intervalle par rapport à une première face d'une de ladite au moins une rangée d'aimants (1) et l'autre étant agencé au même intervalle par rapport à une deuxième face de la rangée d'aimants (1), qui est à l'opposé de la première face de la rangée d'aimants (1).

8. Porte coulissante selon l'une des revendications précédentes, **caractérisée en ce que** chaque organe de suspension (2) présente un rail de suspension en forme de U avec une partie de fond et deux parties latérales, la partie de fond reliant les deux parties latérales, et une rangée d'aimants (1) de ladite au moins une rangée d'aimants (1) étant guidée au moins partiellement dans le rail des suspension en forme de U de telle façon qu'au moins des portions d'une surface intérieure de l'une des parties latérales sont agencées audit certain intervalle par rapport à la première face de la rangée d'aimants (1), et au moins des portions d'une surface intérieure de l'autre partie latérale sont agencées au même intervalle ou à un autre certain intervalle en forme de fente par rapport à une deuxième face de la rangée d'aimants (1) ou d'une autre rangée d'aimants de ladite au moins une rangée d'aimants, face qui est à l'opposé de la première face de la rangée d'aimants (1).

9. Porte coulissante selon l'une des revendications précédentes, **caractérisée en ce que** l'organe de suspension (2) est magnétique doux.

10. Porte coulissante selon l'une des revendications précédentes, **caractérisée en ce que** l'organe de guidage (3) comporte des galets, des corps de roulement et/ou coulissants.

11. Porte coulissante selon l'une des revendications précédentes, **caractérisée en ce que** ladite au moins une rangée d'aimants (1) consiste en un ou plusieurs aimants à grande puissance.

12. Porte coulissante selon la revendication 11, **caractérisée en ce que** ledit un ou lesdits plusieurs aimants à grande puissance sont des aimants à grande puissance des terres rares.

13. Porte coulissante selon la revendication 12, **caractérisée en ce que** ledit un ou lesdits plusieurs aimants à grande puissance des terres rares sont du type NeFeB ou Sm₂Co.

14. Porte coulissante selon l'une des revendications précédentes, **caractérisée en ce qu'**une trame (R_{S}) de bobines individuelles (7) de l'aménagement de bobines est différente d'une trame (R_{E}) de ladite au moins une rangée d'éléments magnétiques doux (20, 20a, 20b), qui est interrompue à certains intervalles.

15. Porte coulissante selon l'une des revendications précédentes, **caractérisée en ce que** la porte coulissante est aménagée comme porte coulissante en arc ou paroi coulissante horizontale.
